# FASCICULE DE BREVET EUROPEEN

(11) **EP 2 239 379 B1**
(45) Date de publication et mention de la délivrance du brevet: **25.07.2012**
(21) Numéro de dépôt: 09005184.8
(22) Date de dépôt: 09.04.2009
(51) Int. Cl.: E03C 1/10, F16K 15/00, F16K 31/126, F16K 41/10

(54) **Dispositif de protection contre la pollution par retour d'eau**
Schutzvorrichtung gegen die Verschmutzung durch Wasserrücklauf
Device for protection against pollution by backflow

(43) Date de publication de la demande: 13.10.2010
(73) Titulaire: Similor AG (Similor SA), 4242 Laufen (CH)
(72) Inventeur: Duran, José, 1232 Confignon (CH)
(74) Mandataire: Micheli & Cie SA

(56) Documents cités:
- EP-A- 1 688 547
- DE-A1-102007 006 285

## Description

La présente invention se rapporte au domaine des dispositifs de protection contre la pollution par retour d'eau dans les réseaux de distribution d'eau.

Le phénomène de retour d'eau consiste en une circulation non souhaitée d'eau souillée ou contaminée de l'aval vers l'amont, à travers un organe de soutirage, tel qu'un robinet ou un mitigeur, lorsque celui-ci est ouvert. Le phénomène de retour d'eau se produit lorsqu'une dépression est créée en amont de l'organe de soutirage et lorsque l'orifice de distribution correspondant à cet organe de soutirage est immergé dans un récipient d'eau souillée ou contaminée.

Les dispositifs de protection contre la pollution par retour d'eau sont connus. Certains d'entre eux se présentent sous la forme de simples clapets anti-retour tel que celui décrit dans le document DE 10 2007 006 285; le document EP1688547A décrit une vanne anti-retoure avec deux pistons. D'autres sont connus de l'homme du métier sous l'une des dénominations suivantes : dispositif casse-vide ou dispositif brise-vide ou dispositif anti-siphonnage ou encore dispositif anti-refoulement. Ils sont disposés sur une conduite et aptes à provoquer une aération de celle-ci, de telle sorte qu'en cas de dépression dans la conduite, ce soit de l'air qui soit aspiré et non de l'eau souillée.

De manière connue, un dispositif de type casse-vide est disposé en série sur une conduite, en aval d'un organe de soutirage, et comporte une entrée d'air tel que, par exemple, une ouverture sur l'air ambiant. Le dispositif est agencé pour:
- rester en position fermée, c'est-à-dire que l'entrée d'air est obturée, lors du fonctionnement normal du réseau de distribution, et
- se mettre en position ouverte, c'est-à-dire que l'entrée d'air est ouverte, dans les cas de disfonctionnement du réseau de distribution d'eau évoqués ci-dessus.

Un tel dispositif de type casse-vide est utilisé dans une situation de disfonctionnement, afin de ne pas polluer le réseau d'eau potable. Par exemple, dans l'un des étages supérieurs d'un immeuble, une douchette est immergée dans une baignoire remplie d'eau souillée, l'organe de soutirage commandant le débit de la douchette étant ouvert. Si, simultanément, une dépression est créée en amont de cet organe de soutirage, par exemple par une coupure accidentelle de la pression d'alimentation, il s'amorce un siphonnage par lequel l'eau souillée contenue dans la baignoire s'écoule à travers la douchette et son organe de soutirage, vers l'amont du réseau général d'alimentation et polluant ainsi le réseau d'eau potable. Si un utilisateur d'un étage inférieur ouvre alors un robinet de son réseau intérieur de distribution, il ne recevra pas de l'eau provenant de la canalisation générale d'alimentation, puisque celle-ci est fermée, mais il recevra de l'eau souillée provenant de la baignoire de l'étage supérieur.

Les disfonctionnements du réseau de distribution d'eau sont normalement peu fréquents, c'est pourquoi un dispositif de type casse-vide devrait rester en position fermée la plupart du temps. Mais on a constaté en pratique que lorsqu'un dispositif de type casse-vide de la technique antérieure est installé en série sur une conduite en aval de l'organe de soutirage, il commute brièvement de la position fermée à la position ouverte ou partiellement ouverte pour revenir aussitôt en position fermée, chaque fois que le débit d'eau est refermé à l'organe de soutirage. Cette brève commutation, répétée plusieurs dizaines de fois par jour, a pour conséquence que certaines surfaces du dispositif sont alternativement exposées à l'eau et à l'air. Un dépôt progressif de tartre se forme sur ces surfaces, ce qui provoque un défaut d'étanchéité du dispositif qui à terme provoque tôt ou tard des fuites qui ne sont pas admissibles et/ou la nécessité de remplacer le dispositif.

Un but de la présente invention est de proposer un dispositif de protection contre la pollution par retour d'eau qui permette de surmonter l'inconvénient mentionné ci-dessus.

Selon un premier aspect, l'invention se rapporte à un dispositif de protection contre la pollution par retour d'eau, destiné à être associé à un organe de soutirage disposé sur une conduite d'alimentation d'eau en parallèle avec un organe de soutirage entre une portion amont soumise à une pression primaire et une portion aval soumise à une pression secondaire, et comportant au moins un moyen d'aération relié à l'air ambiant. Le dispositif est apte à occuper une configuration dite « ouverte », dans laquelle ledit moyen d'aération est en communication avec ladite portion aval, et une configuration dite « fermée », dans laquelle ledit moyen d'aération n'est pas en communication avec ladite portion aval, le passage de l'une à l'autre de ces configurations étant commandé par la pression primaire.

En particulier, le dispositif occupe ladite configuration fermée tant que la pression primaire est supérieure à la pression atmosphérique, et passe dans ladite configuration ouverte dès que la pression primaire devient égale ou inférieure à la pression atmosphérique. Il repasse de ladite configuration ouverte à ladite configuration fermée dès que la pression primaire redevient supérieure à la pression atmosphérique.

Un avantage d'un tel dispositif de protection contre la pollution par retour d'eau réside dans le fait qu'il reste constamment en position fermée aussi longtemps qu'il doit l'être et qu'il ne passe en position ouverte que lorsque la pression dans la conduite d'alimentation devient inférieure ou égale à la pression atmosphérique. Son fonctionnement n'est en effet commandé que par la pression primaire de sorte que les risques d'entartrage des surfaces du dispositif, qui ont été évoqués en liaison avec les dispositifs de l'art antérieur, sont considérablement réduits, si ce n'est supprimés.

Selon l'invention, un dispositif de protection contre la pollution par retour d'eau est revendiqué dans la revendication 1.

D'autres caractéristiques du dispositif de protection contre le retour d'eau selon le premier aspect de l'invention sont définies dans les revendications annexées 2 à 13.

Selon un deuxième aspect, l'invention se rapporte à un organe de soutirage destiné à être installé sur une conduite d'un réseau intérieur de distribution d'eau, qui comporte au moins un dispositif de protection contre la pollution par retour d'eau selon le premier aspect, qui lui est directement intégré. L'organe de soutirage peut être, par exemple, un robinet ou un mitigeur.

Selon un troisième aspect, l'invention se rapporte à un agencement d'un réseau intérieur de distribution d'eau, qui comporte un dispositif de protection contre la pollution par retour d'eau selon le premier aspect et/ou un organe de soutirage selon le deuxième aspect de l'invention.

L'invention sera mieux comprise à la lecture de la description détaillée qui va suivre, d'un mode de réalisation particulier du dispositif de protection contre le retour d'eau, fourni à titre illustratif et nullement limitatif, en référence aux dessins annexés, dans lesquels :
- les figures 1 et 2 représentent, en coupe axiale et en perspective, un dispositif de protection contre le retour d'eau selon un premier mode de réalisation, respectivement en position fermée et en position ouverte ;
- les figures 3 et 4 représentent, en coupe axiale, une variante du dispositif de protection selon le premier mode de réalisation, respectivement en position ouverte et en position fermée ;
- la figure 5 représente, en coupe axiale, un dispositif de protection selon un deuxième mode de réalisation, en position fermée ;
- la figure 6 représente, en coupe axiale, un dispositif de protection selon un troisième mode de réalisation, en position fermée;
- les figures 7 et 8 représentent, en coupe axiale et en perspective, respectivement l'insert amont et l'insert aval, communs aux trois modes de réalisation du dispositif de protection ;
- les figures 9 et 10 représentent respectivement, en coupe axiale et en perspective, une membrane déformable, destinée au premier mode de réalisation du dispositif de protection, dans les deux configurations extrêmes qu'elle peut occuper;
- la figure 11 représente, en coupe axiale et en perspective, une première variante d'exécution du piston, destinée au premier mode de réalisation du dispositif de protection ;
- la figure 12 illustre une situation de disfonctionnement et représente schématiquement une portion d'un réseau intérieur de distribution d'eau, sur lequel est installé un dispositif de protection contre le retour d'eau, en parallèle à un organe de soutirage de type robinet simple ;
- la figure 13 représente schématiquement un organe de soutirage de type mitigeur, sur lequel sont installés deux dispositifs de protection contre le retour d'eau associés l'un à la conduite d'eau froide et l'autre à la conduite d'eau chaude.

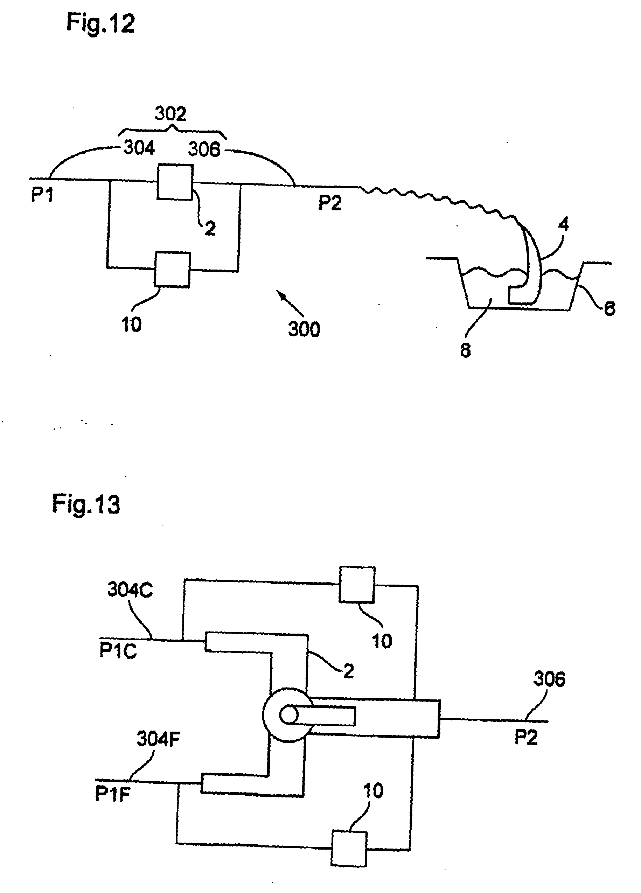

En se référant tout d'abord à la figure 12, il est représenté schématiquement un réseau intérieur de distribution d'eau 300, comportant une conduite d'alimentation d'eau 302 sur laquelle est installé un organe de soutirage 2, tel qu'un robinet, qui commande le débit d'eau d'une douchette 4. La douchette 4 est immergée dans une baignoire 6 contenant de l'eau souillée 8. La portion 304 de la conduite 302 située en amont de l'organe de soutirage 2 est soumise à une pression P1 dite pression primaire tandis que la portion 306 de la conduite 302 située en aval de l'organe de soutirage 2 est soumise à une pression P2 dite pression secondaire. Un dispositif 10 de protection contre la pollution par retour d'eau est branché en parallèle à l'organe de soutirage 2. Il est relié, en amont, à la portion amont 304 de la conduite 302 et, en aval, à la portion aval 306 de la conduite 302. Par suite, le dispositif 10 est soumis en amont à la pression primaire P1 et en aval à la pression secondaire P2.

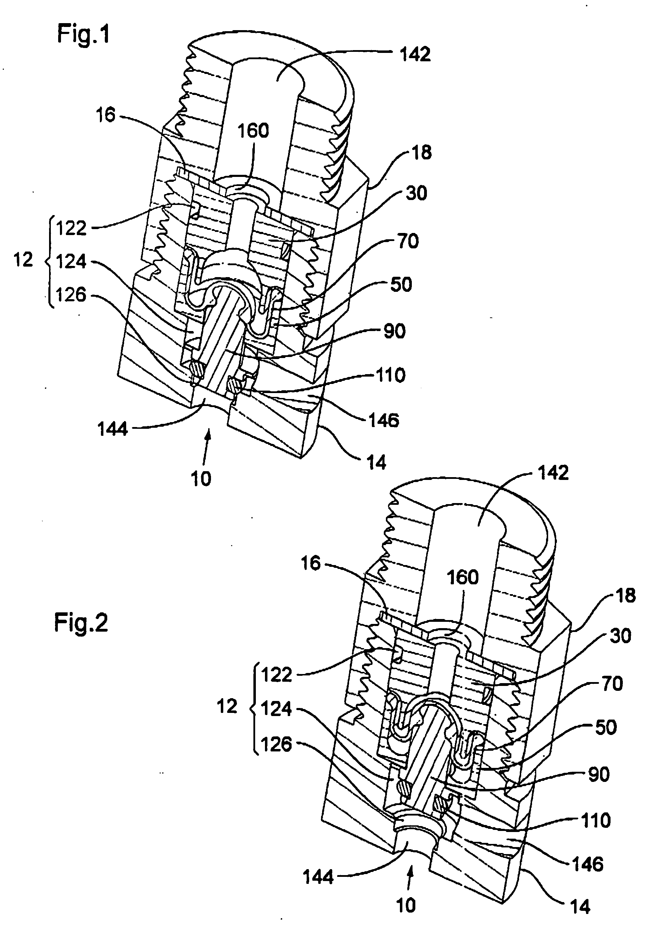

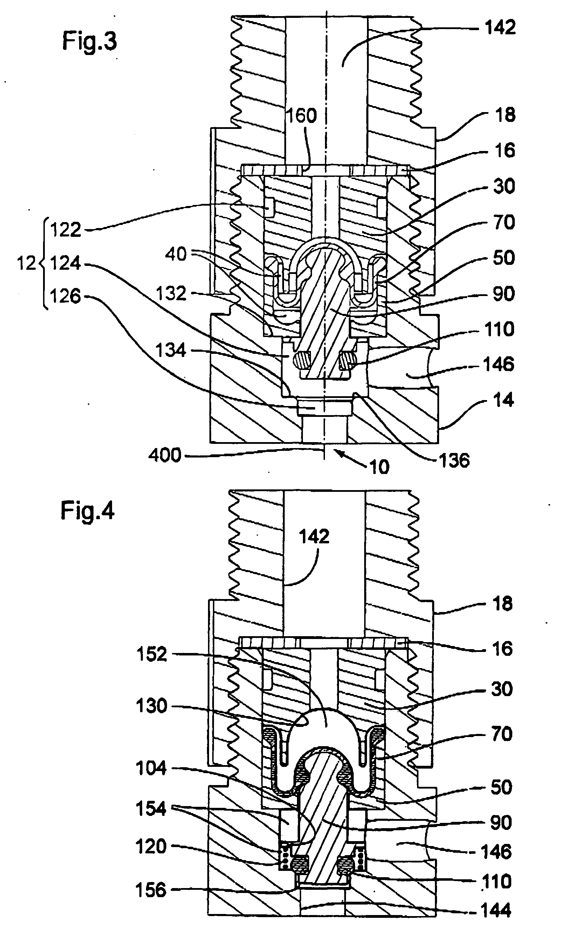

Les figures 1 à 4 illustrent un premier mode de réalisation du dispositif 10 de protection contre la pollution par retour d'eau. Le dispositif 10 est disposé dans un logement 12 défini à l'intérieur d'un corps principal 14 et ayant un axe longitudinal de révolution 400 (voir figure 3). Le logement 12 est fermé par un couvercle 16 doté d'une ouverture centrale 160. Le couvercle 16 est maintenu sur le corps 14 par un chapeau ou raccord 18 vissé sur ledit corps principal 14.

Le logement 12 est relié à la portion amont 304 de la conduite d'eau 302 par un canal amont 142 ménagé à travers le chapeau 18 et à la portion aval 306 de la conduite d'eau 302 par un canal aval 144 ménagé à travers le corps principal 14. Entre ses deux extrémités, il est relié à l'air ambiant par un canal d'aération 146, qui traverse le corps principal 14. Sur l'exemple illustré, le canal amont 142 et le canal aval 144 sont orientés le long de l'axe longitudinal 400 tandis que le canal d'aération 146 s'étend suivant une direction radiale.

Le logement 12 comporte, successivement, de son extrémité reliée à la portion amont 304 vers son extrémité reliée à la portion aval 306, trois tronçons 122, 124, 126 qui se suivent le long de l'axe longitudinale de révolution 400. Le premier tronçon 122 a une section plus grande que le deuxième tronçon 124, qui a lui-même une section plus grande que le troisième tronçon 126. Par suite, le logement 12 possède un premier épaulement 132 au niveau de la jonction entre le premier tronçon 122 et le deuxième tronçon 124 et un deuxième épaulement 134 au niveau de la jonction entre le deuxième tronçon 124 et le troisième tronçon 126. En outre, un chanfrein 136 est réalisé entre ledit deuxième épaulement 134 et le troisième tronçon 126.

Sur l'exemple illustré, le corps principal 14 renferme deux inserts tubulaires 30, 50 et une membrane étanche 70 et un piston 90 doté d'un moyen d'étanchéité 110.

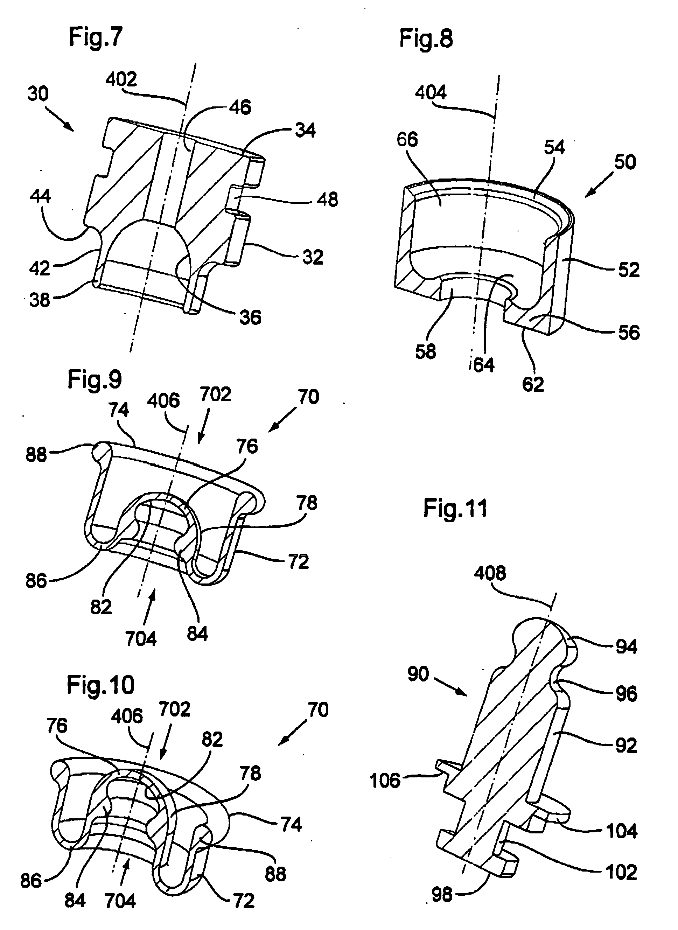

L'un des inserts, appelé insert tubulaire amont ou cuvette 30, est représenté en coupe axiale et en perspective à la figure 7. Il présente une symétrie de révolution autour d'un axe 402. Il possède un corps 32 se présentant sous la forme d'un cylindre plein ayant une base 34 plane et une cuvette 36 axialement opposée à ladite base 34. Le bord 38 de la cuvette 36 est radialement en retrait par rapport à la paroi latérale du corps 32, et forme autour de la cuvette 36 une cheminée dont la paroi extérieure 42 est sensiblement plus courte que la profondeur de ladite cuvette 36. Entre cette paroi extérieure 42 et la face extérieure du corps 32 se trouve un gradin 44 sensiblement parallèle à la base 34 et relié audit bord 38 par un raccord arrondi. Un alésage 46 traverse axialement le corps 32 entre la base 34 et le fond de la cuvette 36. En outre, une gorge périphérique 48 s'étend sur l'extérieur du corps 32.

L'autre insert, appelé insert tubulaire aval ou bouchon 50, est représenté en coupe axiale et en perspective à la figure 8. Il présente une symétrie de révolution autour d'un axe 404. Il possède un corps 52 se présentant sous la forme d'un cylindre creux et ayant une paroi intérieure 66. Le corps 52 se termine d'un côté par un bord libre 54. Il est fermé de l'autre côté par un fond 56 doté d'un trou central 58- La face extérieure 62 du fond 56 est sensiblement plane. Sa face intérieure 64 est annulaire et concave. D'un côté, elle remonte légèrement au niveau du trou central 58, et de l'autre côté elle se prolonge par la paroi intérieure 66 du corps 52.

La membrane 70 est représentée en coupe axiale et en perspective aux figures 9 et 10. Elle est de type membrane roulante, c'est-à-dire qu'elle se présente sous la forme d'un corps souple 72 cylindrique et creux, ayant une symétrie de révolution autour d'un axe 406. Elle présente un bord libre 74 à une extrémité et un bout fermé 76 à l'autre extrémité, ledit bout 76 étant retourné et apte se déplacer axialement plus ou moins loin en direction du bord libre 74, voire même au-delà du bord libre 74. Le bout 76 constitue ainsi un dôme à l'intérieur de la membrane 70. Les figures 9 et 10 montrent, respectivement, la position la plus retournée et la position la moins retournée du bout 76. Ledit bout 76 possède une face intérieure 78 sensiblement lisse et une face extérieure 82 dotée d'une nervure périphérique 84. Le bout 76 est reliée au reste du corps 72 par un fond 86 arrondi ayant une courbure opposée à celle dudit bout 76. Le bord libre 74 de la membrane 70 est doté d'un bourrelet 88 orienté vers l'extérieur.

Le piston 90 est représenté en coupe axiale et en perspective à la figure 11. Il présente une symétrie de révolution autour d'un axe 408. Il possède un corps 92 se présentant sous la forme d'un cylindre plein prolongé à une extrémité par une tête 94 dont il est séparé par un col 96 et à l'autre extrémité par une base plane 98. Vers cette autre extrémité, il comporte une rainure périphérique 102. Ladite rainure 102 est dimensionnée de telle manière que la distance qui la sépare de cette extrémité aval soit inférieure à la hauteur du troisième tronçon 126 du logement 12 et de telle manière que sa dimension longitudinale soit supérieure à sa dimension radiale. Du côté de la tête 94, la rainure 102 est surmontée par une collerette 104. Sur sa face orientée vers la base 98, la collerette 104 présente, de manière optionnelle, un épaulement 106.

On va maintenant décrire de quelle manière lesdits inserts 30, 50, ladite membrane 70 et ledit piston 90 sont agencés entre eux et dans le logement 12, en référence aux figures 1 à 4.

Un moyen d'étanchéité, se présentant, dans l'exemple illustré, sous la forme d'un joint torique 110, est disposé dans la rainure périphérique 102 du piston 90. En variante ce joint torique peut être monobloc avec le piston. Du fait que la dimension longitudinale de la rainure 102 est supérieure à sa dimension radiale, le joint torique 110 dépasse radialement vers l'extérieur du corps du piston 90.

Le piston 90 est inséré dans le logement 12 du corps principal 14, par son extrémité munie du joint torique 110. Le piston 90 est dimensionné de telle manière que le diamètre de sa base 92 soit sensiblement égal au diamètre du troisième tronçon 126 et que le diamètre de sa collerette soit sensiblement égal à celui du deuxième tronçon 124.

L'insert aval 50 est ensuite introduit dans le premier tronçon 122, sa base 52 venant en appui contre le fond dudit premier tronçon 122 et son trou central 58 entourant le corps 92 du piston 90. Ce trou central 58 est dimensionné de telle manière que son diamètre soit sensiblement égal à celui dudit corps 92.

La membrane 70 est ensuite introduite dans le premier tronçon 122, la face extérieure 82 de son bout 76 venant surmonter la tête 94 du piston 90. La nervure périphérique 84 du bout 76 de la membrane 70 vient se loger dans le col 96 du piston 90, ce qui a pour effet de solidariser la membrane 70 et le piston 90. Les pièces sont dimensionnées de telle manière que le fond 78 de la membrane épouse la tête 94 et le col 96 du piston 90. Le bord libre 72 de la membrane 70 est dimensionné de telle manière que le diamètre extérieur de son bourrelet 84 soit sensiblement égal au diamètre du premier tronçon 122.

L'insert amont 30 est ensuite introduit dans le premier tronçon 122, sa cuvette 36 étant en regard de la membrane 70. Les deux inserts 30, 50 sont dimensionnés de telle manière que les diamètres de leurs corps respectifs 32, 52 soient sensiblement égaux au diamètre du premier tronçon 122. Le couvercle 16 est ensuite disposé de manière à fermer le logement 12 du corps principal 14. Enfin, le chapeau 18 est vissé sur le corps principal 14.

Lorsque les deux inserts 30, 50, la membrane 70 et le piston 90 sont installés dans le logement 12, leurs axes respectifs 402, 404, 406, 408 sont confondus avec l'axe du logement 12.

L'insert amont 30 et l'insert aval 50 sont dimensionnés de telle manière que lorsqu'ils sont positionnés respectivement contre le couvercle 16 et contre le fond du premier tronçon 122, ils sont alors séparés par un espace 40. (voir figure 3)

La membrane 70 est disposée dans cet espace 40. Sa surface en regard de l'insert amont 30, dénommée surface amont 702, est supérieure à sa surface en regard de l'insert aval 50, dénommée surface aval 704. (voir figures 7 et 8)

Le bourrelet 88 du bord 74 de la membrane 70 est maintenu entre le palier 44 de l'insert amont 30 et le bord libre 54 de l'insert aval 50, ce qui a pour effet d'appliquer ledit bord 74 contre la paroi interne du premier tronçon 122 du logement 12.

Par suite, la membrane 70 constitue une frontière étanche entre une première zone 152 du dispositif 10, délimitée entre l'insert amont 30 et ladite membrane 70 et une deuxième zone 154 du dispositif 10, située au-delà de ladite membrane 70, vers l'aval (voir figure 4). La première zone 152 est en communication avec le canal amont 142. La deuxième zone 154 communique avec le canal d'aération 146.

Lorsque le dispositif 10 est dans la position fermée (figures 1 et 4), l'extrémité aval du piston 90 est engagée dans le troisième tronçon 126 du logement 12. Le joint torique 110, qui dépasse radialement du corps 92 du piston 90, est comprimé contre le chanfrein 136 ménagé entre le deuxième tronçon 124 et le troisième tronçon 136. Par suite, la deuxième zone 154 est délimitée entre ladite membrane 70 et le moyen d'étanchéité 110, qui constitue lui-même une frontière étanche entre ladite deuxième zone 154 et une troisième zone 156, située au-delà dudit moyen d'étanchéité 110 vers l'aval. Cette troisième zone 156 communique avec le canal aval 144 (voir figure 4). Ainsi, en position fermée du dispositif 10, la membrane 70 repose contre le bord libre 54, la paroi intérieure 66 du corps 52 et la face intérieure 64 du fond 56 de l'insert aval 50, les surfaces en contact dudit insert aval 50 et de ladite membrane 70 ayant des formes complémentaires.

Lorsque le dispositif 10 est dans la position ouverte (figures 2 et 3), la deuxième zone 154 et la troisième zone 156 ne sont pas séparées.

Dans la variante de cette première forme d'exécution illustrée aux figures 3 et 4 un ressort de rappel 120 du piston 90 est prévu prenant appuis sur le fond de la seconde zone 154 du corps 14 et la collerette 104 du piston 90 tendant à le déplacer en position ouverte du dispositif

On va maintenant décrire le fonctionnement du dispositif 10.

Comme cela a été expliqué en référence à la figure 12, le dispositif 10 reste dans sa position fermée, représentée aux figures 1 et 4, lors du fonctionnement normal du réseau de distribution d'eau 300.

Si la pression primaire P1 dans la portion amont 304 de la conduite 302 chute jusqu'à devenir égale à la pression atmosphérique P0, l'effet ressort de la membrane 70 ou du ressort de rappel s'il existe déplace cette membrane 70 vers l'insert amont 30, puisque cette conduite amont 304 est en communication avec la première zone 152 par l'intermédiaire du canal amont 142. Du fait que le bord 74 de la membrane 70 est maintenu entre le palier 44 de l'insert amont 30 et le bord libre 54 de l'insert aval 50, ce bord 74 reste immobile. La force de rappel du ressort ou de la membrane a pour effet que le bout 76 de la membrane 70 s'approche de la cuvette 36 de l'insert amont 30. Dans son déplacement, la membrane 70 entraîne le piston 90 qui est fixé sur sa surface aval 704. L'extrémité aval du piston 90 est alors dégagée de la troisième portion 126 du logement 12. Le moyen d'étanchéité 110 n'est plus comprimé contre le chanfrein 136. Le dispositif 10 se trouve alors dans la position ouverte (figures 2 et 3). La deuxième zone 154 et la troisième zone 156 sont alors en communication. L'air qui pénètre dans le dispositif 10 par le canal d'aération 146 ne peut pas se propager vers l'amont puisque la membrane 70 constitue une frontière étanche entre la première zone 152 et la deuxième zone 154. Il remplit la deuxième zone 154, ainsi que la troisième zone 156 qui est en communication avec ladite deuxième zone 154. Puis il se propage vers l'aval dans le troisième tronçon 126, Cette circulation d'air empêche qu'un refoulement d'eau souillée, provenant de la deuxième portion 306 de la conduite d'eau 302, puisse pénétrer dans le dispositif 10 par l'intermédiaire du troisième tronçon 126.

Lorsque la pression primaire P1 dans la portion amont 304 de la conduite 302 augmente et devient de nouveau supérieure à la pression atmosphérique P0, le dispositif 10 revient automatiquement dans sa position fermée (figures 1 et 4). Les trois zones 152,154.156 sont de nouveau séparées de façon étanche.

Un avantage du dispositif 10 qui vient d'être décrit réside dans le fait que le passage de la position fermée à la position ouverte, et vice versa, du dispositif 10 ne dépend que de la valeur de la pression primaire P1 dans la portion amont 304 de la conduite d'eau 302 et dans la première zone 152, cette valeur étant comparée à la pression atmosphérique P0 qui règne dans la deuxième zone 154, ou à la force du ressort de rappel 120. Par suite, les variations de la pression secondaire P2 n'ont pas d'influence sur le fonctionnement du dispositif 10. Il en résulte que le dispositif 10 n'est pas commuté brièvement d'une position à l'autre à chaque manipulation de l'organe de soutirage 2, comme le sont les dispositifs de l'art antérieur.

L'invention se rapporte aussi à un organe de soutirage 2 dans le corps duquel est intégré au moins un dispositif 10 de protection contre la pollution par retour d'eau. Lorsque l'organe de soutirage 2 est un robinet simple, il lui est associé un seul dispositif 10. Lorsque l'organe de soutirage 2 est un mitigeur, comme illustré sur la figure 13, comportant une portion amont d'eau chaude 304C soumise à une pression primaire d'eau chaude P1C, une portion amont d'eau froide 304F soumise à une pression primaire d'eau froide P1F et une portion aval 306 soumise à une pression secondaire P2, il lui est associé deux dispositif 10 de protection contre la pollution par retour d'eau. L'un de ces dispositifs 10 est disposé entre la première portion amont d'eau chaude 304C et la portion aval 306 tandis que l'autre de ces dispositifs 10 est disposé entre la première portion amont d'eau froide 304F et la portion aval 306.

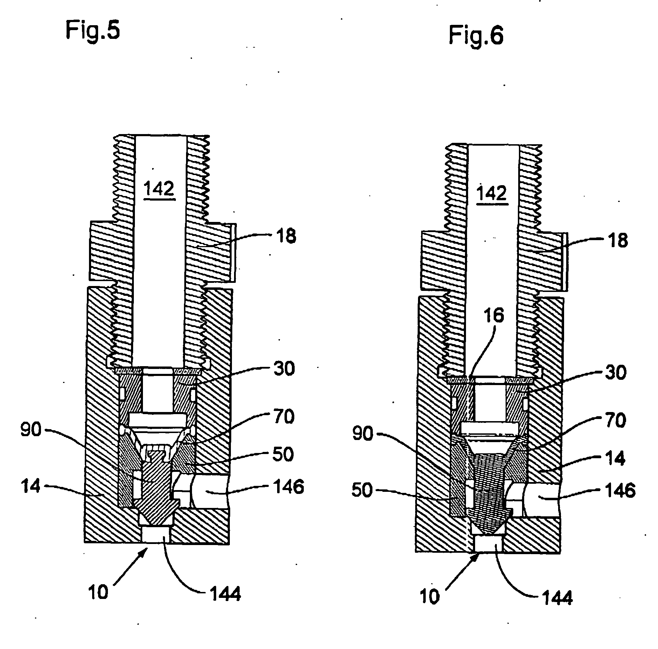

Dans la forme d'exécution illustrée à la figure 5 le couvercle 16 est maintenu en place dans le corps principal 14 par un raccord 18 vissé dans ce corps 14. L'insert amont 30, la membrane 70 et l'insert aval 50 sont ainsi maintenus dans le corps principal 14.

Le piston 90 est fixé par son extrémité arrière dans la partie centrale de la membrane 70 et sa partie avant, de forme conique, vient obturer le canal aval 144 du dispositif.

Dans la variante illustrée à la figure 6 le piston 90 est venu d'une pièce de fabrication avec la membrane 70.

On remarquera encore que dans les formes d'exécution illustrées aux figures 5 et 6 l'insert tubulaire amont 30 peut être venu d'une pièce de fabrication avec le raccord 18 et que l'insert tubulaire aval 50 peut être venu d'une pièce de fabrication avec le corps 14 du dispositif. Ceci est particulièrement avantageux lorsque ces pièces sont exécutées en matière plastique. Par ailleurs, ces formes d'exécutions peuvent également comporter un ressort de rappel du piston tendant à le placer en position d'ouverture du dispositif.

L'invention se rapporte encore à un réseau intérieur de distribution d'eau 300, comportant une conduite d'alimentation d'eau 302 sur laquelle est installé un organe de soutirage 2 tel qu'un robinet simple ou un mitigeur, auquel est associé au moins un dispositif 10 de protection contre la pollution par retour d'eau.

Le ou les dispositifs de protection contre la pollution par retour d'eau sont montés en parallèle à l'organe de soutirage sur la ou les conduites d'alimentation en eau.

Bien entendu, l'invention n'est pas limitée au mode de réalisation qui a été illustré aux figures et couvre des variantes de réalisation à la portée de l'homme du métier.

Une caractéristique qui se retrouve dans toutes les formes d'exécution et application du dispositif de protection est qu'il est toujours branché en parallèle avec l'organe de soutirage auquel il est associé dans le circuit d'alimentation en eau. De cette manière la pression primaire P1 est appliquée en permanence sur le côté amont de la membrane quel que soit l'état, ouvert ou fermé, de l'organe de soutirage. Ainsi l'ouverture du dispositif de protection ne dépend que de la pression primaire P1 et n'est pas influencée par l'ouverture ou la fermeture de l'organe de soutirage.

## Revendications

1. Dispositif de protection contre la pollution par retour d'eau (10), capable d'être associé à un organe de soutirage (2) disposé sur une conduite d'alimentation d'eau (302) entre une portion amont (304) et une portion aval (306) soumise à une pression secondaire (P2), ledit dispositif (10) comportant au moins un canal d'aération (146) relié à l'air ambiant; un corps (14) comportant un canal amont (142) capable être relié à la portion amont (304) de la conduite d'alimentation et un canal aval (144) capable d'être relié à la portion aval (306) de la conduite d'alimentation, ces portions amont et aval de la conduite d'alimentation étant situées de part et d'autre de l'organe de soutirage (2); et un insert tubulaire amont (30) et un insert tubulaire aval (50) séparés par un espace (40), logés dans ce corps entre ce canal amont (142) et ce canal aval (144),
**Caractérisé par le fait que** le dispositif comporte:
- une membrane déformable (70) logée dans l'espace (40) et susceptible de se déplacer dans celui-ci, cette membrane comportant un bord maintenu entre lesdits inserts amont (30) et aval (50),
- un piston (90) solidaire de la partie centrale (76) de la membrane et comportant une extrémité aval munie de moyens d'étanchéité (110) susceptibles d'obturer ledit canal aval (144) ; et
- le canal d'aération (146) traversant la paroi du corps (14) du dispositif et reliant le côté aval de la membrane (70) à l'air ambiant, de telle sorte que la portion amont (304) est soumise en permanence à une pression primaire (P1) quel que soit l'état ouvert ou fermé de l'organe de soutirage (2); et le dispositif est apte à occuper une configuration dite « ouverte », dans laquelle ledit canal d'aération (146) est en communication avec ladite portion aval (306), et une configuration dite « fermée », dans laquelle ledit canal d'aération (146) n'est pas en communication avec ladite portion aval (306), et en ce que le passage de l'une à l'autre de ces configurations est commandé par la pression primaire (P1) uniquement.

2. Dispositif (10) selon la revendication 1, dans lequel ledit piston (90) est doté, vers son extrémité aval, d'une rainure périphérique (102) dans laquelle est logé un moyen d'étanchéité (110).

3. Dispositif (10) selon la revendication 2, dans lequel ledit moyen d'étanchéité (110) est un joint torique.

4. Dispositif selon la revendication 1, **caractérisé par le fait que** l'extrémité aval du piston (90) est conique assurant ainsi l'étanchéité du canal aval (144).

5. Dispositif (10) selon l'une quelconque des revendications 1 à 4, dans lequel la surface de la membrane (70) qui est en regard de l'insert amont (30), dite surface amont (702), est supérieure à sa surface qui est en regard de l'insert aval (50), dite surface aval (704).

6. Dispositif (10) selon l'une quelconque des revendications 1 à 5, dans lequel l'insert aval (50) et la membrane (70) ont des surfaces en regard complémentaires.

7. Dispositif (10) selon l'une quelconque des revendications 5 à 6, dans lequel ledit piston (90) est solidaire de la surface, dite surface aval (704), du corps (72) de la membrane (70) qui est en regard de l'insert aval (50).

8. Dispositif (10) selon la revendication 6, dans lequel l'assemblage dudit piston (90) et de ladite surface aval (704) est réalisé au moyen d'un col (96) dudit piston (90) qui coopère avec une nervure périphérique (84) de ladite surface aval (704).

9. Dispositif selon la revendication 7, **caractérisé par le fait que** le piston (90) et la membrane (70) sont venu d'une pièce de fabrication.

10. Dispositif (10) selon l'une quelconque des revendications 1 à 8, **caractérisé en ce que**, lorsqu'il est en position fermée, le piston (90) se trouve dans une position dans laquelle son extrémité aval obture de façon étanche la communication entre ledit moyen d'aération (146) et le canal aval (144).

11. Dispositif (10) selon l'une quelconque des revendications 1 à 10, dans lequel ledit piston (90) est soumis à l'action d'un ressort de rappel (120) tendant à maintenir le dispositif en configuration ouverte.

12. Dispositif (10) selon l'une quelconque des revendications 1 à 11 et la revendication 4, **caractérisé en ce qu'**une première zone (152) est comprise entre l'insert amont (30) et la membrane (70), une deuxième zone (154) est comprise entre la membrane (70) et le moyen d'étanchéité (110) et une troisième zone (156) est située au-delà du moyen d'étanchéité (110) vers l'aval.

13. Dispositif (10) selon l'une quelconque des revendications 1 à 12 et la revendication 4, **caractérisé en ce que**, lorsque la pression primaire (P1) devient égale à la pression atmosphérique (P0), la membrane (70) se déplace de par son élasticité propre et/ou sous l'action du ressort de rappel (120) vers l'amont et entraîne avec elle le piston (90), ce qui met en communication la deuxième zone (154) reliée à l'air ambiant avec la troisième zone (156) relié à la portion aval (306).

14. Organe de soutirage (2), tel qu'un robinet ou un mitigeur, destiné à être installé sur une conduite d'alimentation d'eau (302), **caractérisé en ce qu'**il comporte au moins un dispositif de protection contre la pollution par retour d'eau (10) selon l'une quelconque des revendications 1 à 13, qui lui est directement intégré.

15. Agencement de réseau intérieur de distribution d'eau (300), **caractérisé en ce qu'**il comporte un dispositif de protection conte la pollution par retour d'eau (10) selon l'une quelconque des revendications 1 à 13, et/ou un organe de soutirage (2) selon la revendication 14.

## Claims

1. Device for protection against pollution by backflow of water (10), capable of being associated with a drawing-off member (2) disposed on a water-supply conduit (302) between an upstream portion (304) and a downstream portion (306) which is subject to a secondary pressure (P2), the said device (10) having at least one aeration duct (146) connected to the ambient air; a body (14) having an upstream duct (142) capable of being connected to the upstream portion (304) of the supply conduit, and a downstream duct (144) capable of being connected to the downstream portion (306) of the supply conduit, these upstream and downstream portions of the supply conduit being located on both sides of the drawing-off member (2), and an upstream tubular insert (30) and a downstream tubular insert (50) which are separated by a space (40) and are housed in this body between this upstream duct (142) and this downstream duct (144),
**characterised in that** the device has:
- a deformable membrane (70) housed in the space (40) and able to move therein, this membrane having an edge held between the said upstream (30) and downstream (50) inserts,
- a piston (90) fixedly attached to the central part (76) of the membrane and having a downstream end provided with sealing means (110) able to close the said downstream duct (144); and
- the aeration duct (146) passing through the wall of the body (14) of the device and connecting the downstream side of the membrane (70) to the ambient air so that the upstream portion (304) is permanently subject to a primary pressure (P1) no matter what the open or closed state of the drawing-off member (2); and the device is able to occupy a so-called "open" configuration in which the said aeration duct (146) is in communication with the said downstream portion (306), and a so-called "closed" configuration in which the said aeration duct (146) is not in communication with the said downstream portion (306), and **in that** the passage from one of these configurations to the other is controlled by the primary pressure (P1) alone.

2. Device (10) as claimed in claim 1, wherein the said piston (90) is provided, towards its downstream end, with a peripheral groove (102) in which a sealing means (110) is housed.

3. Device (10) as claimed in claim 2, wherein the said sealing means (110) is an O-ring.

4. Device as claimed in claim 1, **characterised in that** the downstream end of the piston (90) is conical, thus ensuring the sealing tightness of the downstream duct (144).

5. Device (10) as claimed in any one of claims 1 to 4, wherein the surface of the membrane (70) which faces the upstream insert (30), or upstream surface (702), is greater than its surface which faces the downstream insert (50), or downstream surface (704).

6. Device (10) as claimed in any one of claims 1 to 5, wherein the downstream insert (50) and the membrane (70) have complementary facing surfaces.

7. Device (10) as claimed in any one of claims 5 to 6, wherein the said piston (90) is fixedly attached to the surface, or downstream surface (704), of the body (72) of the membrane (70) which faces the downstream insert (50).

8. Device (10) as claimed in any claim 6, wherein the assembly of the said piston (90) and of the said downstream surface (704) is carried out by means of a collar (96) of the said piston (90) which cooperates with a peripheral rib (84) of the said downstream surface (704).

9. Device (10) as claimed in claim 7, **characterised in that** the piston (90) and the membrane (70) are produced from one workpiece.

10. Device (10) as claimed in any one of claims 1 to 8, **characterised in that**, when it is in the closed position, the piston (90) is located in a position in which its downstream end sealingly closes the communication between the said aeration means (146) and the downstream duct (144).

11. Device (10) as claimed in any one of claims 1 to 10, wherein the said piston (90) is subject to the action of a return spring (120) tending to keep the device in an open configuration.

12. Device (10) as claimed in any one of claims 1 to 11 and claim 4, **characterised in that** a first zone (152) exists between the upstream insert (30) and the membrane (70), a second zone (154) exists between the membrane (70) and the sealing means (110), and a third zone (156) is located beyond the sealing means (110) in the downstream direction.

13. Device (10) as claimed in any one of claims 1 to 12 and claim 4, **characterised in that** when the primary pressure (P1) becomes equal to the atmospheric pressure (P0), the member (70) is moved by its own elasticity and/or under the action of the return spring (120) in the upstream direction and draws the piston (90) with it, which brings the second zone (154), which is connected to the ambient air, into communication with the third zone (156) which is connected to the downstream portion (306).

14. Drawing-off member (2), such as a tap or mixing valve, intended to be installed on a water supply conduit (302), **characterised in that** it has at least one device for protection against pollution by backflow of water (10) as claimed in any one of claims 1 to 13, which is directly integrated therewith.

15. Internal network arrangement for the distribution of water (300), **characterised in that** it has a device for protection against pollution by backflow of water (10) as claimed in any one of claims 1 to 13, and/or a drawing-off member (2) as claimed in claim 14.

## Patentansprüche

1. Vorrichtung zum Schutz gegen Verunreinigung durch Rückspülung (10), die mit einem Entnahmeelement (2) verbunden werden kann, das in einer Wasserzufuhrleitung (302) zwischen einem stromaufwärtigen Abschnitt (304) und einem stromabwärtigen Abschnitt (306) angeordnet ist, der einem sekundären Druck (P2) ausgesetzt ist, wobei die Vorrichtung (10) mindestens einen Lüftungskanal (146), der mit der Umgebungsluft verbunden ist; einen Körper (14), der einen stromaufwärtigen Kanal (142), der mit dem stromaufwärtigen Abschnitt (304) der Zufuhrleitung verbunden werden kann, und einen stromabwärtigen Kanal (144), der mit dem stromabwärtigen Abschnitt (306) der Zufuhrleitung verbunden werden kann, umfasst, wobei dieser stromaufwärtige Abschnitt und dieser stromabwärtige Abschnitt der Zufuhrleitung sich auf beiden Seiten des Entnahmeelements (2) befinden; und einen stromaufwärtigen rohrförmigen Einsatz (30) und einen stromabwärtigen rohrförmigen Einsatz (50), die durch einen Zwischenraum (40) getrennt sind und die in diesem Körper zwischen diesem stromaufwärtigen Kanal (142) und diesem stromabwärtigen Kanal (144) untergebracht sind, umfasst,
**dadurch gekennzeichnet, dass** die Vorrichtung Folgendes umfasst:
- eine verformbare Membran (70), die in dem Zwischenraum (40) untergebracht ist und die dazu im Stande ist, sich in diesem zu bewegen, wobei diese Membran einen Rand umfasst, der zwischen dem stromaufwärtigen Einsatz (30) und dem stromabwärtigen Einsatz (50) gehalten wird,
- einen Kolben (90), der mit dem Mittelteil (76) der Membran fest verbunden ist und der ein stromabwärtiges Ende umfasst, das mit Dichtungsmitteln (110) ausgestattet ist, die dazu im Stande sind, den stromabwärtigen Kanal (144) zu verschließen; und
- den Lüftungskanal (146), der die Wand des Körpers (14) der Vorrichtung durchquert und der die stromabwärtige Seite der Membran (70) mit der Umgebungsluft verbindet,
so dass der stromabwärtige Abschnitt (304) ständig einem primären Druck (P1) ausgesetzt wird, ganz gleich, ob das Entnahmeelement (2) im offenen oder geschlossenen Zustand ist; und die Vorrichtung dazu geeignet ist, eine so genannte "offene" Konfiguration, in der der Lüftungskanal (146) mit dem stromabwärtigen Abschnitt (306) in Verbindung steht, und eine so genannte "geschlossene" Konfiguration, in der der Lüftungskanal (146) nicht mit dem stromabwärtigen Abschnitt (306) in Verbindung steht, einzunehmen, und dass die Umstellung von einer dieser Konfigurationen zu der anderen einzig und allein durch den primären Druck (P1) gesteuert wird.

2. Vorrichtung (10) nach Anspruch 1, wobei der Kolben (90) an seinem stromabwärtigen Ende mit einer Umfangsnut (102) versehen ist, in der ein Dichtungsmittel (110) untergebracht ist.

3. Vorrichtung (10) nach Anspruch 2, wobei das Dichtungsmittel (110) ein O-Ring ist.

4. Vorrichtung (10) nach Anspruch 1, **dadurch gekennzeichnet, dass** das stromabwärtige Ende des Kolbens (90) konisch ist, wodurch die Dichtigkeit des stromabwärtigen Kanals (144) sichergestellt wird.

5. Vorrichtung (10) nach einem der Ansprüche 1 bis 4, wobei die Oberfläche der Membran (70), die dem stromaufwärtigen Einsatz (30) gegenüber liegt, die so genannte stromaufwärtige Oberfläche (702), größer als dessen Oberfläche, die dem stromabwärtigen Einsatz (50) gegenüber liegt, die so genannte stromabwärtige Oberfläche (704), ist.

6. Vorrichtung (10) nach einem der Ansprüche 1 bis 5, wobei der stromabwärtige Einsatz (50) und die Membran (70) zueinander komplementäre Oberflächen aufweisen.

7. Vorrichtung (10) nach einem der Ansprüche 5 bis 6, wobei der Kolben (90) mit der Oberfläche, der so genannten stromabwärtigen Oberfläche (704), des Körpers (72) der Membran (70), die dem stromabwärtigen Einsatz (50) gegenüber liegt, fest verbunden ist.

8. Vorrichtung (10) nach Anspruch 6, wobei das Zusammenfügen des Kolbens (90) und der stromabwärtigen Oberfläche (704) mittels eines Kragens (96) des Kolbens (90) umgesetzt wird, der mit einer Umfangsrippe (84) der stromabwärtigen Oberfläche (704) zusammenwirkt.

9. Vorrichtung nach Anspruch 7, **dadurch gekennzeichnet, dass** der Kolben (90) und die Membran (70) von einem Werkstück stammen.

10. Vorrichtung (10) nach einem der Ansprüche 1 bis 8, **dadurch gekennzeichnet, dass**, wenn sie in einer geschlossenen Stellung ist, der Kolben (90) sich in einer Stellung befindet, in der sein stromabwärtiges Ende die Verbindung zwischen dem Lüftungsmittel (146) und dem stromabwärtigen Kanal (144) dicht verschließt.

11. Vorrichtung (10) nach einem der Ansprüche 1 bis 10, wobei der Kolben (90) der Einwirkung einer Rückholfeder (120) unterworfen wird, die sich spannt, um die Vorrichtung in der offenen Konfiguration zu halten.

12. Vorrichtung (10) nach einem der Ansprüche 1 bis 11 und Anspruch 4, **dadurch gekennzeichnet, dass** ein erster Bereich (152) zwischen dem stromaufwärtigen Einsatz (30) und der Membran (70) liegt, ein zweiter Bereich (154) zwischen der Membran (70) und dem Dichtungsmittel (110) liegt und ein dritter Bereich (156) sich über dem Dichtungsmittel (110) stromabwärts befindet.

13. Vorrichtung (10) nach einem der Ansprüche 1 bis 12 und Anspruch 4, **dadurch gekennzeichnet, dass**, wenn der primäre Druck (P1) gleich dem atmosphärischen Druck (P0) ist, die Membran (70) sich durch ihre Eigenelastizität und/oder unter Einwirkung der Rückholfeder (120) stromaufwärts bewegt und den Kolben (90) mitnimmt, was den zweiten Bereich (154), der mit der Umgebungsluft verbunden ist, in Verbindung mit dem dritten Bereich (156), der mit dem stromabwärtigen Abschnitt (306) verbunden ist, bringt.

14. Entnahmeelement (2), wie ein Wasserhahn oder eine Mischbatterie, das an einer Wasserzufuhrleitung (302) installiert werden soll, **dadurch gekennzeichnet, dass** es mindestens eine Vorrichtung zum Schutz gegen Verunreinigung durch Rückspülung (10) nach einem der Ansprüche 1 bis 13
umfasst, die es direkt integriert.

15. Anordnung eines internen Wasserversorgungsnetzes (300), **dadurch gekennzeichnet, dass** sie eine Vorrichtung zum Schutz gegen Verunreinigung durch Rückspülung (10) nach einem der Ansprüche 1 bis 13 und/oder ein Entnahmeelement (2) nach Anspruch 14 umfasst.
